# EUROPEAN PATENT APPLICATION

(11) **EP 0 761 265 A1**
(43) Date of publication of application: **12.03.1997**
(21) Application number: 95942304.7
(22) Date of filing: 28.12.1995
(51) Int. Cl.: A63F 9/22

(54) **VIDEO GAME DEVICE FOR SIMULATION GAME OF COMIC BOOK**

(30) Priority: 30.12.1994 US 367810; 31.12.1994 US 381563
(71) Applicant: SEGA ENTERPRISES, LTD., Tokyo 144 (JP)
(72) Inventor: MORAWIEC, Peter, Redwood City, CA 94065 (US); STEPAENS, Adrian, Redwood City, CA 94065 (US); MORITA, Toshiyasu, Redwood City, CA 94065 (US)
(74) Representative: Goddar, Heinz J., Dr.
(86) International application number: JP9502750
(87) International publication number: WO9620767

(57) **Abstract**

With this video game device, audio-visual display is implemented in order to simulate the episodic characteristics of a comic book page. This display is defined by separate panels which are arranged consecutively to form a page layout. Play using a player-controlled character is limited to an active panel. The character must complete a prescribed task in the active panel. After completing this task the player may proceed forwards through the consecutively arrayed panels which form the story. A conversation system is also provided whereby it is possible to simulate balloons which convey emotions, effects and aids relating to properties connected with the telling of the game story. A graphical effect facility is also provided which allows increased effects when simulating the comic book medium, such as torn paper or the hand of the cartoonist. Moreover, in this video game device and method the capacity of the video game system controller and data storage device, which process and store the graphic character elements, are improved.

## Description

### TECHNICAL FIELD

The present application relates in general to a video game device having a video game cartridge (or an equivalent means such as game software supplied by means of a cable), a game console and a video display, and to a method of processing data. In particular it relates to a video game device which not only employs a peculiar layout and episodic nature in order to simulate a comic book by means of an audio-visual display but is capable of storing, processing and displaying its graphic character elements in a suitable manner, and to a method of processing data.

### BACKGROUND ART

A logical application of video game technology is to provide video game devices featuring comic book characters and stories. However, many previous comic-based video game devices have merely employed a comic book hero as the main character in a common video game device with horizontally scrolled backgrounds and "levels" of play representing essentially random adventures in different game worlds characterized by different background graphics. These prior comic book game devices have not been able to capture the essence of the comic book as a medium such as visually and episodically distinct story panels or the ability to create and to follow a story line and the majority of video game formats provide a game content which may be likened to a simple random wandering journey dependent on the characteristics of the various game worlds created by that format.

An example of a conventional videogame device is the Sega Genesis videogame device. The platform of this videogame device utilizes a 16 bit data format and limited video RAM (VRAM) capacity. The provision of additional ROM storage on game cartridges would adversely impact upon game pricing. With the introduction of higher data formats (32 bit and 64 bit), videogame players would become accustomed to richer graphics and more rapid processing and would make the game that much more enjoyable.

It is an object of the present invention to provide a videogame device whose audio visual presentation authentically simulates the traditional comic book format particularly with respect to the "snapshot" story style. Simultaneously, it is an object of the present invention to preserve the playability, interactivity and discoverability of existing videogame devices. These objectives required the rich use of detailed comic-book-like graphics distributed on ROM (or the equivalent such as downloading from cable). These objectives, in one embodiment designed for a 16 bit videogame device, were implemented in the COMIX ZONE™ product which performs a comic book simulation which captures the essential features of the comic book medium. Another object is that in order to serve the existing installed base of 16 bit videogame consoles, using affordable game cartridges, videogames are provided which are characterized in that they capture the rich graphics and rapid processing features of the newer 32 and 64 bit platforms without having to modify the platform hardware or the data format. These objectives are met according to the present invention.

### DISCLOSURE OF THE INVENTION

The videogame device to which the invention described in Claims 1-28 pertains serves to improve the property of simulating comic books. It is characterized by a level-type configuration. This configuration is arranged using well-defined distinct panels when laying out the pages of the comic book, the panels being bounded in both space and time for the episodic narration of the story. In other words, the character which is controlled by the player (hereinafter referred to as the "player-controlled character") can be moved or communicated with only within a single active panel at one time. Moreover, before moving this player-controlled character to the next panel, it is necessary to complete the predetermined task within the active panel. Each panel is one scene in the story told on the page layout. The route which the player-controlled character takes through the panels on the page layout determines the story line. The player can be provided with alternative routes through the page. The ratios of the page layout dimensions are rectangular, which also enhances the comic book look. The videogame device of the present invention is also characterized by an art style which employs strong colors, flat shaded areas and exaggerated animations. The device of the present invention also utilizes a dialogue system which simulates the speech balloons commonly used in the comic book medium. Thereby it is possible to convey emotion, story information and text effects such as "Ka-Pow" after a punch. Other graphical effects, for example, indication of the cartoonist's hand drawing in characters in a panel, help to emphasize the "comic book world" inside the page versus the "real world" outside of the page.

As part of the episodic nature of the comic book simulation of the present invention, the player-controlled character is specifically limited to play in one panel on the page layout until the predetermined tasks within that panel have been completed. Upon completion of the tasks within the active panel, under player control, the player-controlled character appears to jump out of the active panel just completed, over the panel break between panels and into the next panel of the story which then becomes active. The player is informed of directional arrows in the currently active panel which indicate the next panel in the story and is given panel sequence alternatives through these directional arrows. When alternate paths through the page layout are available for player selection, more than one directional arrow will appear in the panel. In one embodiment, previously task-completed panels cannot be revisited during game play to emphasize the "forward" direction of the time and story flow behind the page layout. To emphasize the paper nature of the comic book medium, certain animation effects are provided. For example, when demon characters are destroyed, graphics which simulate torn up small pieces of paper shower through the panel representing the demon destruction. In another example of these paper-medium-enhancing graphics, a bomb burst causes a hole to be blown through the page on which the panels are written. Another aspect of the present invention which furthers the comic book simulation is clearly defined panel boundaries. These boundaries strictly limit graphical effects such as rain or flowing water to a particular panel and which do not permit overflow of these graphical effects into adjacent panels. In one embodiment of the present invention, these panel boundaries are structured so that the player-controlled character cannot be seen outside of the active panel, so that the player-controlled character can only perform tasks in the active panel.

These graphical effects heighten the appearance of a comic book, and are implemented in the familiar format of the videogame device by approximately matching the panel size to that of the video display screen. Moreover, in order to show clearly whether the player-controlled character has entered the next screen yet or whether he has already completed a given panel, it is possible in addition to the active panel to allow the partial view of other inactive dormant panels. The protocol of approximately matching panel size to display screen size provides the player with a reasonable environment in which to explore and to interact. In order to provide the player with a reasonable degree of freedom in game play, there are panels which provide alternate routes through the page layout, giving the player panel-selection options on how to play through the page layout, and also giving the player options in their attempts to solve the predetermined tasks. The video game device also provides a combination of predetermined combat and strategy tasks in each panel which must be completed and after the completion the player-controlled character is permitted to move forward into the next panel of the page layout. The player-controlled character is also permitted to accumulate and to carry forward items which may be useful in confronting future tasks in subsequent panels. The video game device in a preferred embodiment is provided with the ability to keep score based upon the completion of the predeterminded tasks.

The attributes of the video game device and method to which the invention described in Claims 28-33 pertains serve to heighten the performance of the 16-bit platform and may be classified into three categories. The first and second categories involve techniques which enable specific portions of a display screen to have attributes significantly different than the attributes of other parts of the display screen without having to store extra graphical character elements. The third category involves the use of techniques to dynamically change VRAM data storage to accomodate a significantly larger library of graphical character elements than previously permitted.

The first category relates to a display list technique whereby a certain graphical character element can be linked to a routine. This routine is a process whereby while that character element is being displayed it is possible to emphasize the display by modifying or amending one or more existing bits which define that character. This display list technique is connected with causing a vertical interrupt to occur at an appointed position on the display. Between such interrupts the routine in connection with the graphical character element which is to be modified is called up and implemented automatically. An example of this technique is modification of the color palette using coloring of the character element displayed in that position.

The second technique is related to the definition of specified areas such as a rectangular position within the whole of the graphics map which has different attributes from the balance of the map. An example of this technique is the definition of areas where character priority information stored in 16 bit format is represented. In the remaining portion of the graphics map, the stored priority is suppressed and a different single priority value is substituted.

The third technique relates to the use of a virtual character library where the numer of usable character spaces is increased by allocationg the 32K VRAM to the storage of characters. This technique also makes it possible to determine the anticipated frequency of appearance of a certain character in an adjoining area of the display when that character element is allocated to the VRAM memory. Each time the character element does appear the number of appearances is decremented. When that frequency reaches zero, the present device allocates new character element data to that space within the VRAM, and is told that it is possible to display the new character element.

### BRIEF DESCRIPTION OF THE DRAWINGS

Fig. 1 is a block diagram illustrating the outline structure of a video game device which forms one embodiment of the present invention;
Fig. 2 is a flowchart which outlines processing by the controller;
Fig. 3 illustrates the graphical display of the page layout showing the characteristic panels which make up a story;
Fig.4 illustrates the graphical display of the video display screen showing the relationship between the screen display and the panels;
Fig. 5 illustrates the relationship between the page layout and the video display screen;
Fig. 6 illustrates the manner of vertical interrupt during generation of a video display screen at a designated position of a horizontal scanning line in order to impart a desired special graphical effect at a designated position on the video display screen;
Fig. 7 illustrates a register conversion chart for horizontal interrupts;
Fig. 8 illustrates a character data format for a graphical character element;
Fig. 9 illustrates another character data format for a graphical character element; and
Fig. 10 illustrates the mapping relationship between a virtual character element implemented on a 16-bit console and VRAM character element memory.

### BEST MODE FOR CARRYING OUT THE INVENTION

An embodiment of the present invention with variations will now be described with reference to the drawings.

The video game device to which this embodiment of the present invention relates will be described on the basis of implementation on a Sega Genesis 16-bit platform. This descripton is intended to illustrate the present invention, but the sphere of the present invention is in no way restricted to the Sega Genesis or an equivalent 16-bit video game device. It is clear that the present invention is also capable of implementation on a 32-bit or a 64-bit video game device. Moreover, the game data and instructions can also be provided on a game cartridge using ROM, and in CD/ROM.

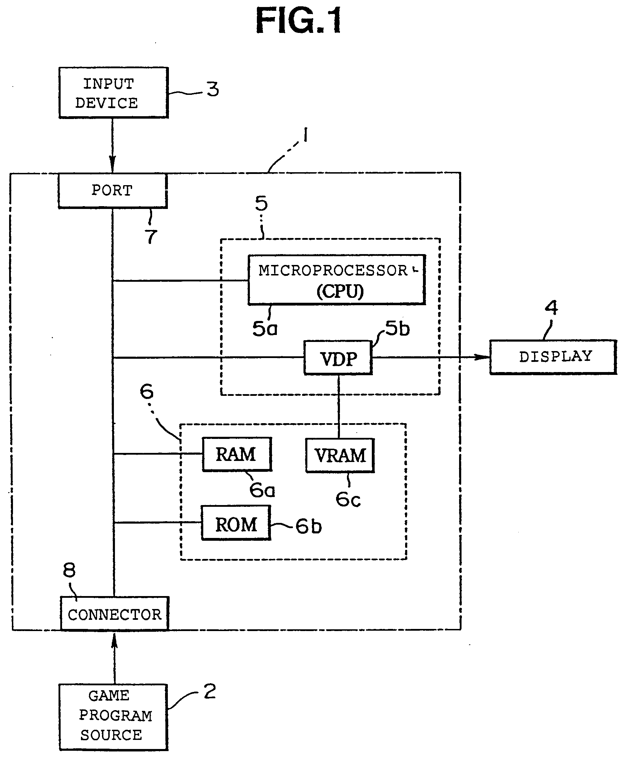

As is shown in Fig. 1, the video game device to which this embodiment relates is equipped with certain fundamental elements. That is to say, the video game device has a console 1, a game program source 2, an input device 3 and a display 4. The console 1 has a controller 5 and a memory 6, while the controller 5 has a microprocessor (CPU) 5a and a video display processor (VPU) 5b. The memory 6 has a ROM 6a, RAM 6b and VRAM 6c. The input device 3 is connected to a port 7 of the controller 1. The port 7 connects by way of the internal bus to the microprocessor 5. The microprocessor 5a is connected by way of the internal bus to the ROM 6a, RAM 6b, the video display processor 5b as the display engine, and a connector 8. The VDP 5b connects to the VRAM 6c, while the connector 8 connects to the video game source 2.

The controller 5 has the ability to communicate with the input device 3 which the player operates, and with the game program source 2 which stores instructions and game data. It also has the ability to generate audio-visual images on the screen of the raster scan-type display 4. Programmable microprocessing techniques for generating graphic images on a raster scan-type video display are well known, as witnessed by US Patents 4,871,167 and 5,357,604.

The controller 5 also has the ability to generate background graphics on the raster scan display screen by implementing character tiles, as well as to implement moving characters known as sprites which respond to player operation.

The input device 3 imparts to the console 1 the data which is necessary to enable the player to operate and execute the game. In particular, it imparts to the console 1 signal output which controls the movement of moving characters in the x-y plane, and responds to operations such as those of firing weapons.

The game program source 2 supplies instructions and game data to the controller 5 in the form of a game cartridge, cable source or other means using ROM. Game data and instructions can also be obtained by way of a cable delivery system such as that described in the US Patent 5,251,909. The game program source of the videogame includes instructions and game data which determine the dialogue system and game rules conveying emotions, story information and text effects by generating simulated speech balloons.

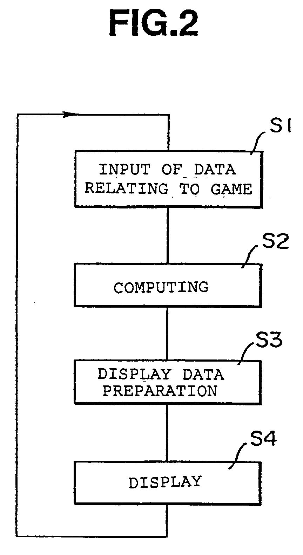

Broadly speaking, the controller 5 performs the processing illustrated in Fig. 2 in accordance with a program contained in the ROM 6a, and implements audio-visual display on the display 3. The microprocessor 5a of the controller 5 not only inputs data from the game program source 2, but inputs player operation information from the input device 3 (Fig. 2, Step S1). The microprocessor 5a then processes movements of the player-controlled character and of the background graphics, the presence or absence of graphic effects, the score and other necessary image data (Fig. 2, Step S2). Next, the video display processor 5b of the controller 5 compiles display data in accordance with processed data imparted by the microprocessor 5a, and displays that display data on the display 4 (Fig. 2, Steps S3-S4). It is also possible for the microprocessor 5a both to process image data and compile display data.

As will be explained below, the details of this processing of image data and compiling of display data are complex, and they are implemented as occasion demands individually or in combination within the process illustrated in Fig. 2 in line with the display timing of the display 3. There is no particular indication of a circuit for outputting sound in the abovementioned structure, but sound data processed in the multiplexor 5a is output from a speaker of display 3 according to the conventional method.

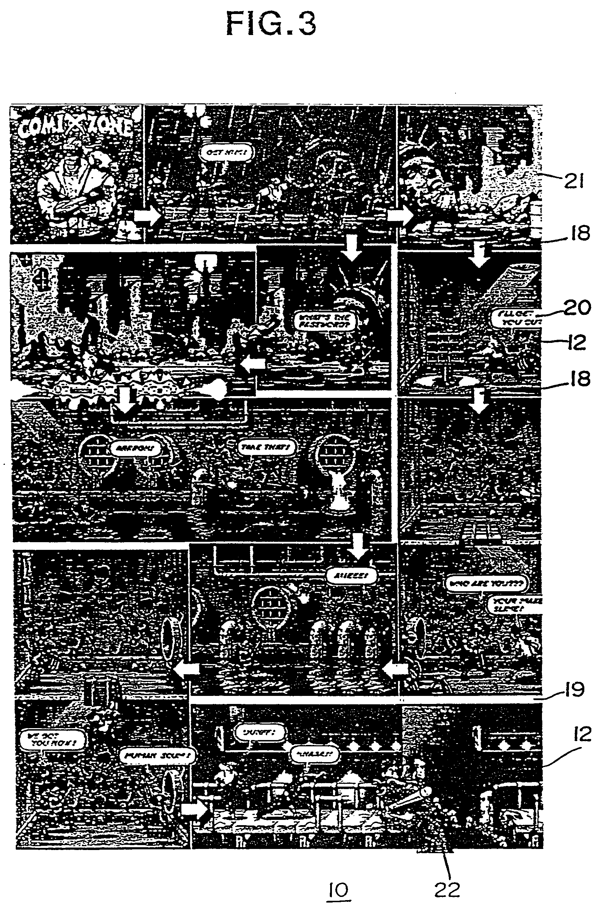

The chief characteristics of the present invention will be explained with reference to Fig. 3. This drawing shows a page layout taken from the game Comix Zone (TM). This game is typical of the enhanced type of game which can be implemented on a 16-bit platform. Certain techniques relating to the present invention will be explained with reference to COMIX ZONE™ , but these techniques are not intended to restrict the gist of the present invention. The aim is to use a detailed example in order to explain the present invention, and not to restrict the range of the attached claims.

In COMIX ZONE™ as illustrated in Fig. 3, the page 10 is comprised of multiple panels 12 which are sequentially arranged to tell the story. In a preferred embodiment, the page layout dimensions are selected to simulate the familiar rectangular comic book page. The panel boundaries 14 define the panels 12 in space and time, and the player-controlled character 16 is restricted to play in an active panel 13 until he has completed certain predetermined combat and strategy tasks. In the embodiment implemented on the Sega Genesis 16-bit platform, the panels 12 are sequentially arranged such that the player-controlled character 16 can only move forward in the panel sequence and cannot revisit previously played panels on the page layout. This forward-only feature enabling only sequential play is an attribute of the preferred embodiment but it is not essential to the present invention, and the appended claims are not intended to be limited to this forward-only feature.

The panel sequence options are presented to the player through the use of directional arrows 18 which signal a direction and the player-controlled character can move along this direction arrow 18. At certain panels, the player may have to choose among alternative routes through the page layout. This feature allows certain variability to game play, providing greater interest and variety to an experienced player. In between the panels 12 are panel breaks 19 which help to emphasize comic-book-look of the videogame device and its associated graphics. The story told by the sequential arrangement of panels 12 is further enhanced by the use of a dialogue system which simulates speech balloons 20 to convey emotion, story information and text effects. In a preferred embodiment of the present invention, additional animation effects 21 are provided to enhance the comic book nature of the game. In particular, when a bomb explodes, the background is torn in the panel. In another example from the preferred embodiment, the "comic book world" inside the panel is distinguished from the "real world" outside the panel by graphics such as the cartoonist's hand 22 drawing character elements in the panels.

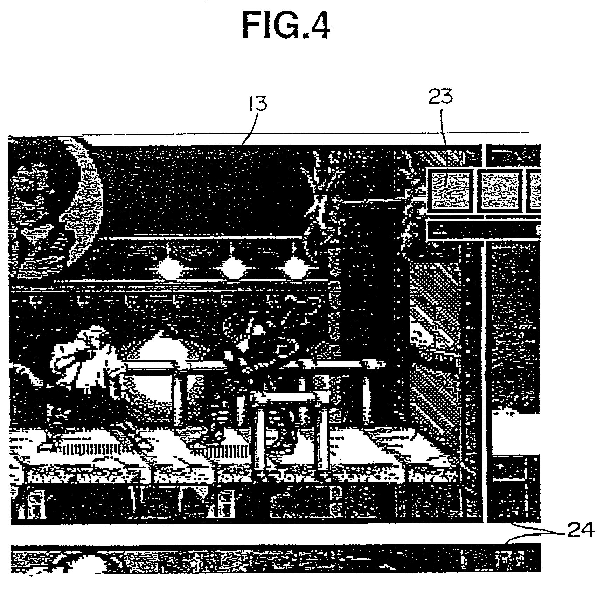

Fig. 4 shows a tool bar 23. This tool bar 23 can be collected and used for the player-controlled character to perform predetermined panel tasks. The tool bar 23 has scoring information and items which are carried on to the next panel. The player can score points by performing predetermined tasks during play.

Fig. 4 also illustrates a sample display screen of display 4. The active panel 13 occupies most of the screen, but part of a dormant panel 24 is also displayed. There follows a detailed explanation of the difference between an active panel and a dormant panel, and in particular how the play of the player-controlled character and display are restricted to the active panel.

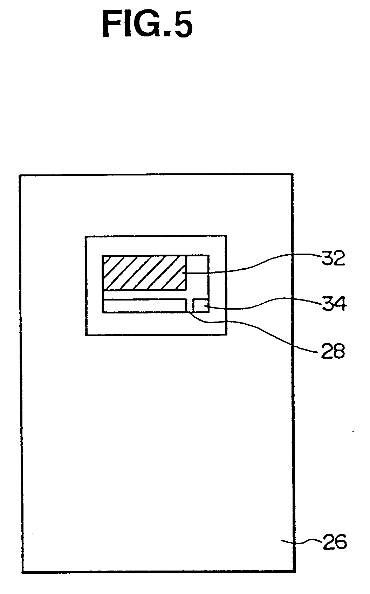

Fig. 5 shows the relationship between a page layout 26 and a display screen 28. In a 16-bit example, data for the graphical character element of the page layout 26 is compressed and stored in the game cartridge ROM. The data compression technique for generating compressed data and its decompression by the video game device to which the present invention pertains are called LZSS. This technique is described in a paper entitled "Data compression algorithms of LARC and LHARC" by Haruhiko Okumura. The related part of this paper is shown below.

### LZSS Coding

This scheme is initiated by J. Ziv and A. Lempel, IEEE Trans, IT-23,337-343 (1977). A slightly modified version is described by J.A. Storer and T.G. Szymanski, J. ACM, 29 928-951. An implementation using a binary tree is proposed by T.C. Bell. IEEE Trans. COM-34,1176-1182 (1986). The algorithm is quite simple: Keep a ring buffer, which initially contains "space" characters only. Read several letters from the file to the buffer. Then search the buffer for the longest string that matches the letter just read, and send its length and position in the buffer.

If the buffer size is 4096 bytes, the position can be encoded in 12 bits. If we represent the match length in four bits, the 〈position,length〉 pair is two bytes long. If the longest match is no more than two characters, then we send just one character without encoding, and restart the process with the next letter. We must send one extra bit each time to tell the decoder whether we are send a 〈position,length〉 pair or an unencoded character.

The accompanying file LZSS.C is a version of this algorithm. This implementation uses multiple binary trees to speed up the search for the longest match. The programs in this article were written in draft-proposed ANSI C and were tested with Turbo C 2.0.

A portion 30 of the entire page layout 26 is decompressed and prepared for display on the display screen 28. Within the display screen 28, there is an active panel 32 and portions of dormant panels 34 are shown. In the preferred embodiment, the active panel 32 has character generation attributes which are different from the other portions of the screen display 28 which causes a difference in appearence. The expression of these different attributes in the active panel versus the rest of the display (and the rest of the page layout) is made possible by defining the rectangular area within the active panel 32 differently from the balance of the page layout 26. This location-dependent graphical capability enables the presentation of different graphical effects and different player-controlled character display capabilities for the active panel 32 versus the balance of the display screen 28.

While a zoom feature is not part of the embodiment implemented on the 16 bit platform, it is possible to provide a videogame device in which the player has the option to view the entire page layout on the display screen and then to "zoom" into the specific panels of interest for a more selective and close-up view of the active panel.

In the COMIX ZONE™ game as implemented on the Sega Genesis 16-bit platform, there were a number of hardware and software limitations which had to be overcome to enable a plausible comic book simulation game. Some of these implementation problems and solutions are specifically described below.

### Priority Technology To Allow Depth

Referring to Figure 5 in order to visually distinguish the active panel 32 (the panel in which the player-controlled character is currently performing tasks) from any dormant panels 34 which are shown on the display screen 28, the display graphics are processed differently depending on location so that the character element graphics in the active panel have a greater three dimensional feel than those displayed in the dormant panels which are flatter in appearance. This visual distinction between a three dimensional feel and a flat appearance is controlled by the use of "priorities". This control instructs the controller 5 and memory 6 (including the 68000 series microprocessor and video RAM (VRAM)), on board the Sega Genesis platform how the various graphic elements should be displayed relative to the other graphic elements in the scene. Higher priority character elements come to the foreground of the scene, and mask any other graphic elements which are in the same location but which have lower priority. For example, the background in a particular scene may be a mountain range, and the desired foreground is a series of rocks. In order to enable the rocks to appear in front of the mountain range, the rocks must be assigned a higher priority than the mountains in that particular region of the display. One of the primary distinctions between the dormant panels and the active panels is the relative priorities of the character elements. In the active panel, the character elements are displayed using their stored priorities. These priorities produce a depth perception or three dimensional appearance. Because the character elements have relative priorities, placing them on different planes within the screen display. The dormant panels are characterized by graphical character elements having a single high priority so that the elements are essentially displayed on a single plane within the screen display, leading to the flat appearance of the character elements within the dormant panels.

Another significant visual distinction between the active panel and the dormant panels which was desired to enhance the episodic nature of the comic book simulation was the appearence and behaviour of the player-controlled character. In the active panel, the player-controlled character is permitted free movement within the boundaries of the active panel. However, the player-controlled character does not appear outside the boundaries of the active panel, even if the player causes the player-controlled character to travel outside of these boundaries. The player-controlled character is configured so as not to appear in the dormant panels. This effect is also achieved through the use of character priority data processing.

The 16 bit platform provides a challenge to the presentation of graphic character elements as three dimensional in a single active panel and flat-appearing graphics in all other-locations (as well as containing display of the player-controlled character to the active panel). This is because the 16 bit platform has limited memory space and because data format for the 16 bit platform, provides only one bit for priority. Both of these challenges are met in the COMIX ZONE™ game by defining the rectangle of the active panel differently from all other regions of the page layout for the performance of processing by the display engine. In the active panel, the single priority bit is stored as a regular part of the character data and this priority bit is expressed to create the perception of depth within the active panel because all of the elements will have varying relative priorities. In the remaining portions of the page layout (i.e., the dormant panels and breaks between them), all character element priorities are set to a single high value which gives them a flat appearance. The reason is that there is no relative variation in display priority, causing them all to appear on a single plane. This priority shifting outside of the active panel also insures that the player-controlled character will have a lower priority than all of the other character elements which have all been given a high priority for all regions of the page layout outside of the active panel.

It is worth noting at this point that the term "character" is used in two different ways. In one sense, "character" is used to refer to "tiles" or 8x8 pixel blocks which make up the visual presentation of the videogame . The second use of "character" is in its more familiar sense - a character in a story. It is important to keep this distinction in mind when referring to the priority technology.

The Sega Genesis display engine handles the movable characters (such as the player-controlled character) separately from the tile-characters, and generates their display differently than the tile-characters. Nonetheless, the priority technology feature which sets the tile-character priorities to a uniform high value outside the rectangular area of the active panel will still have the same effect on the player-controlled character. The higher priority tile-characters outside of the active panel will obscure the display of the player-controlled character.

Consequently, in the COMIX ZONE™ videogame , character priority is made a function of location (within the active panel or not). Since the data format for storing character information allows only one bit for priority information, character priority cannot be made and stored as a function of location because of the 16 bit hardware limitation, and its allocation of 1 bit to priority data. Since the data format only permits storage of a single priority bit, the desired effect of differing appearances cannot be achieved simply using the 16 bit data format. The problem encountered is solved by providing the capability to enable panel-dependent character priority without storing an additional bit of priority data, or without storing the same character graphics multiple times with differing priorities.

These limitations have been overcome in the 16 bit platform. The game graphics data is stored as one large page layout, containing multiple panels. The video console microprocessor can determine which part of the page layout(panels) will be displayed by the display screen at any particular time. The problem of location-dependent priority is solved by defining arbitrary rectangles (corresponding to the active panel) in which the charater element graphics are displayed using their stored priority data to create the three-dimensional appearance because the character elements appear on different planes. On the other hand, in a dormant panel on the display screen (and all other regions of the page layout), the normal character priority information stored with the 16 bit character data is suppressed and all character elements are assigned the same high priority to create the desired flat appearance in the dormant panel. Thus, if the video console microprocessor determines that a particular section of the display screen falls within the predefined rectangle (the active panel), then the microprocessor utilizes the previously-stored character element priority information to create the three dimensional feel of the active panel. In the dormant panels, the stored priorities are suppressed and replaced by a single uniform value to provide character elements with a single high priority to create a flat appearance. What is truly occuring is that an area of the bit map has been defined in which to apply a function (suppress original priority data bit and substitute new value) if the character element falls outside of the predefined rectangle (the active panel). Therefore, the character element does not have to be stored more than once with different priorities depending on location and the panel becomes active. Instead, the game source code provides a routine which enables expression of the stored character priority if it falls within the predefined rectangle, and to otherwise suppress and replace the stored priority bit.

### Display List Allowing Display Modification

In the COMIX ZONE™ game, the art style employs a lot of strong colors, flat shaded areas and exaggerated animation. It also employs a number of special effects, like rain falling down, streams flowing and characters standing in water. There are also animation effects which emphasize the "paper" nature of the game such as tearing up the paper into little pieces or burning holes into the paper. In order to accomplish each of these special graphics effects using the 16 bit platform certain parallel processing or multitasking capabilities were implemented in order to provide the special graphics effects at the right place at the right time.

According to the present invention, the display list technology is used to insure that a desired graphical effect is implemented at a specific location and at a specified time on the display screen. For example, the display list can be used to change the color palette for the display of certain character elements which appear in a specified region of the display, or the display list can be used to cause water in a particular area to shimmer by turning on the bit which corresponds to the shimmer effect. The display list is a management system which changes attributes of character elements as a function of time and location on the video display screen within the parameters of acceptable display and processing timing.

The display list technology takes advantage of some existing attributes of the 16 bit platform to create the desired special effects without having to employ a completely different system. The Sega Genesis display engine has a system which causes a horizontal blank interrupt to occur at time zero and then at regularly spaced intervals during the generation of the horizontal scan lines which comprise the video screen. Because of its regularity, this interrupt scheme limits its use for generating special effects at specific locations on the display screen. The present invention permits the generation of horizontal interrupts at arbitrary locations on the display screen, alternate to those regularly generated by the Sega Genesis console.

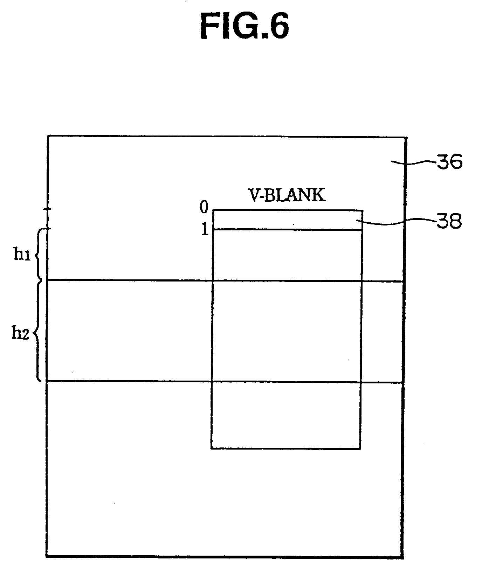

The present invention is explained with reference to Fig. 6. The page layout 36 has a smaller portion 38 and this portion 38 represents the video display screen having horizontal scan lines (the scan lines are not individually shown). At certain locations on the page layout 36, there are special graphical character elements which require more character data storage than permitted by the 16 bit data format. These "events" in space and time on the page layout 36 are shown as occuring at horizontal scan lines h₁ and h₂. Since the Sega Genesis platform has regularly spaced vertical interrupts which are defined by registers which identify where the interrupts should take place and how many horizontal scan lines must be counted before the next vertical interrupt, the present invention provides a software routine for modifying the register information.

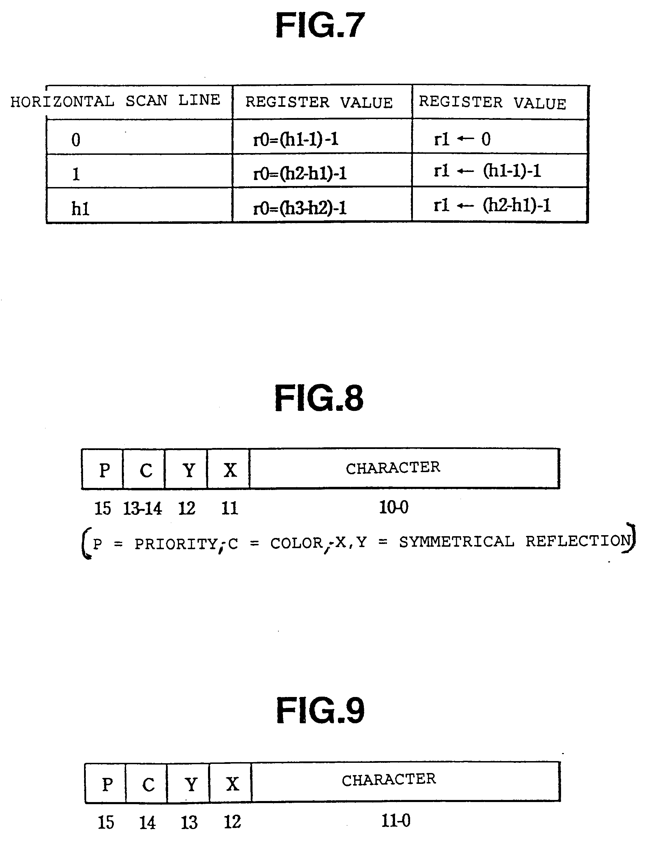

Another hardware feature of the Sega Genesis console is that the interrupt always occurs at one scan line less than the intended scan line. In order to cause the horizontal interrupt to occur at the desired alternate location the register conversions set forth in Fig. 7 are required. The Sega Genesis system is based upon a design in which the register is not used directly. Instead, the system takes the latched value and decrements an internal value. r0 is the latched horizontal blank counter (counting scan lines). r1 is the actual horizontal blank counter.

Once the vertical interrupt is caused at the specific horizontal scan line on which the special graphical effect is desired, the display list technology automatically calls the routine associated with the desired special effect and implements the effect at the designated location. The routines can be assembled as a list and the desired routine called from the list and implemented during the vertical blank occuring at that time and place.

Some of the applications of the display list technology in the COMIX ZONE™ game have the function of changing the color palette. This function is used to color the graphical character elements and then changing it back to the original color palette, turn on the shimmering water effect, and to make the screen darker in a particular location.

### Dynamic VRAM Character Allocation

The 16 bit platform has a specific capacity for storage of graphical character element data in the VRAM. One of the challenges faced in the implementation of the COMIX ZONE™ game on the 16 bit platform involves the use of an increased number of graphical characer elements to provide rich, strong graphics. In order to enable this capability for the COMIX ZONE™ game it was necessary to develop a way to define graphical character elements in the VRAM even though it involved more storage than the VRAM hardware in the 16 bit platform could accomodate.

In prior video game programs written for the Sega Genesis platform, graphical character elements had the format shown in Fig. 8 for the character data.

This data format enables the definition of 2048 graphical character elements.

According to the present invention, a modified data format as shown in Fig. 9 is provided in order to obtain the capacity to store up top 4096 graphical character elements.

The decreased color data in this data format is accommodated by using multiple color palettes as described above with reference to the display list technology.

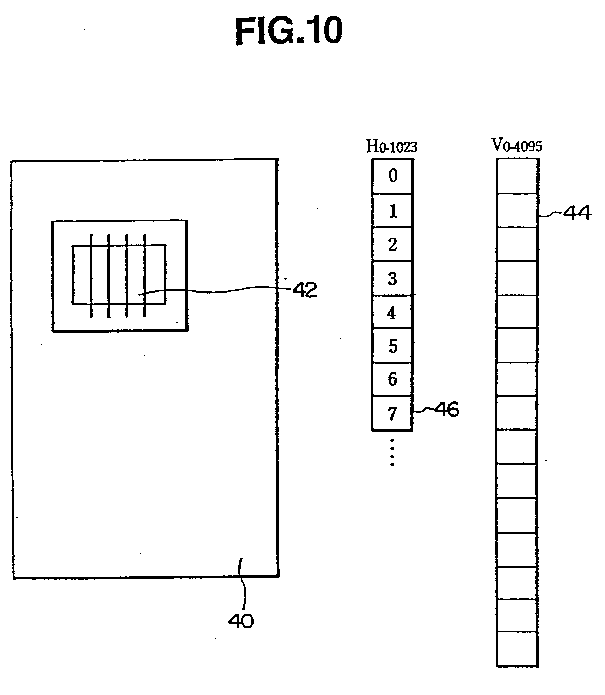

The 64K VRAM allocates 32K for tile-character storage and normally has the capacity to store approximately 1023 character elements. The Sega Genesis display engine determines which character elements are to be displayed in the portion of the page layout to be shown on the screen. The VRAM contains the character elements which should be displayed. According to the present invention, a virtual character element table is created which can be used to map more character elements into the VRAM than can be stored in the VRAM alone. This capability is described with reference to Fig. 10.

The page layout 40 is comprised of a series of character elements. One portion of the page layout will be displayed on the screen and is shown as the region 42. The region 42 is made up of a series of character elements which are called out of the ROM 44 where they are stored as virtual characters, and then stored in the VRAM hardware character storage 46. The display engine also determines how many times that the character element will appear in region 42, and increments the character element Count each time that the character element to be displayed is actually displayed. As an area (a vertical rectangular section of region 42) moves off the display screen, the display engine decrements the character element count for the number of times that character element appeared in the prior area. When the count reaches zero, the display engine determines that the hardware character in the VRAM has become free and available for use to display `other character elements. Thus, when the display engine needs to assign VRAM storage space to a previously unused character element stored in the virtual character table, it determines which VRAM hardware charcter space is available and maps the character element from the virtual character table into the VRAM storage.

In the preferred embodiment, the list of vacant spaces on the VRAM character element storage is linked in the order that the vacancies appear. This allows the display engine to use the vacancies at the top of the linked list first to increase the probability that the vacant character element will not reappear.

Another feature of the embodiment running on the 16-bit platform involves the programming of the console microprocessor to multitask, or to perform multiple tasks to utilize the maximum programming capability of the microprocessor. In its application to generate audiovisual presentations, the microprocessor is designed to accomplish its function in 1/60th of a second intervals which correspond to the refresh rate on the video display screen. The multitasking approach utilized here recognizes that there is processing time left over in many instances (time), before 1/60th of a second has passed. The multitasking programming allows the microprocessor to use this additional time to perform other functions apparently simultaneous with the display function.

The dialogue system which is used in the present invention has a routine which runs for each enemy and each panel which determines when an enemy needs to say something. For example, the routine is programmed so that if the player-controlled character strikes an enemy character, then the enemy character is programmed to say "Ouch!". The program logic determines what the character should say for each event. The program outputs a string of text which is converted to the Sega Genesis format bit map in RA< using a proportional bit map font. This text is uploaded to the VRAM, and the text is then surrounded by a balloon border using character-tiles. This hardware displayable sprite (combining the text and the border) is entered into the display sprite list.

While the present invention has been described with reference to a particular embodiment, it is understood that the disclosure has been made for purpose of illustrating the invention by way of example and is not intended to limit the scope of the attached claims. It is understood that components may be arranged in different ways and that equivalent devices can be substituted for those described here. These changes and substitutions are not intended to depart from the scope and the spirit of the present invention.

### FIG. 1

- 2: GAME PROGRAM SOURCE
- 3: INPUT DEVICE
- 4: DISPLAY
- 5A: MICROPROCESSOR
- 7: PORT
- 8: CONNECTOR

### FIG. 2

- S1: INPUT OF DATA RELATING TO GAME
- S2: COMPUTING
- S3: DISPLAY DATA PREPARATION
- S4: DISPLAY

### FIG. 7

HORIZONTAL SCAN LINE
REGISTER VALUE
REGISTER VALUE

### FIG. 8

CHARACTER
P = PRIORITY
C = COLOR
X,Y = SYMMETRICAL REFLECTION

### FIG. 9

CHARACTER

## Claims

1. A video game device for playing games based on a simulated comic book page having a player-controlled character and a story, comprising:
a program source of the video game which includes game data and game commands, being used by a system controller which implements an audio-visual display simulating the comic book page;
an input device operated by the player and supplying an input signal which controls the movements of said player-controlled character; and
a system controller, having a game microprocessor which implements the program of the video game, and a video display connector which is connected to said microprocessor and to a random access memory, data being stored which is used when implementing video display, input signals from an input device which is operated by the player in such a way as to control the movement of said player-controlled character being received and supplying the audio-visual display of the video game on to a video display image by implementing said video program source, this audio-visual display having a plurality of distinct panels divided by panel breaks, this plurality of panels being arranged consecutively to form a page layout, each panel exhibiting a spatial and temporal border in order to explain the comic book story and having a predetermined task to execute using said player-controlled character, the order of these consecutive panels being determined in such a manner as to respond to a set of predefined game rules not defined by the player, and to respond to said player's input device.

2. A video game device as described in Claim 1, wherein said audio-visual display also has simulated conversation balloons which convey emotions, story information or text effects.

3. A video game device as described in Claim 1, wherein said system controller allows said player-controlled character to move only in a direction following the order of panels and not to return to a panel which has already been visited.

4. A video game device as described in Claim 1, wherein the proportions of said page layout to said audio-visual game display are selected so as to simulate an actual printed comic book page.

5. A video game device as described in Claim 1, wherein said audio-visual game display has graphical character animation which simulates the properties of the paper of said comic book simulation.

6. A video game device as described in Claim 1,wherein said system controller allows the player to select the route which said player-controlled character follows between panels from a plurality of routes and to proceed in said order of panels.

7. A video game device as described in Claim 1, wherein at least one of said audio-visual display panels has graphical character items which said player-controlled character can collect in one frame and use in the next.

8. A video game device as described in Claim 1, wherein said system controller awards, follows and implements audio-visual display of points gained by a player by executing said predetermined player tasks.

9. A method of playing games based on a simulated comic book page, being a method of providing a video game device using an assembly of video game program source, video display, controller and player-input device, said method comprising:
a) (i) a program source of the video game which includes game data and game commands, being used by a system controller which implements an audio-visual display simulating the comic book page; (ii) a player-input device supplying an input signal which controls the movements of the player-controlled character; and (iii) a processing step whereby, there being a game microprocessor which implements the program of the video game, and a video display connector which is connected to said microprocessor and to a video random access memory, data which is used when implementing video display is stored and the audio-visual display of the video game is supplied on to a video display image by implementing said video game program source, this audio-visual display having a plurality of distinct panels divided by panel breaks, this plurality of panels being arranged consecutively to form a page layout, each panel exhibiting a spatial and temporal border in order to explain the comic book story and having a prescribed task to execute using said player-controlled character, the order of these consecutive panels being determined in such a manner as to respond to a set of predefined game rules not defined by the player, and to respond to said player's input device;
b) a step whereby simulation of the story of said comic book is initiated from the first of the panels arranged in consecutive order and using the player-controlled character;
c) a step whereby said player-controlled character is controlled using said player-input device to execute said prescribed tasks;
d) a step whereby said player-controlled character is moved using said player-input device from one panel to the next panel in said consecutive order of panels; and
e) a step whereby the story of an actual comic book is simulated by allowing said player-controlled character to play through said consecutive panels.

10. A method as described in Claim 9, wherein said audio-visual display also has simulated speech balloons which convey emotions, story information or text effects.

11. A device which executes a video game, being a device wherein said video game is based on the theme of a comic book, and the player moves the character in the story through a series of graphical panels designed to mimic comic panels of the comic book, said device comprising:
a) a player-input device operated by said player and controlling the movements of the player-controlled character;
b) a display device which displays graphical images;
c) a controller which receives input signals from an input device operated by said player in such a way as to designate the movements of said character, this controller (i) conveying at least one simulated page of the comic book to the memory system, each page containing a plurality of said graphical panels arranged in a predetermined array, (ii) including a graphical display of said character in the designated panel of said graphical panels, this graphical display being generated in accordance with said movements designated by said input signals, and (iii) extracting said graphical image from said simulated page for the purpose of display by said display device, this graphical image including said designated graphical panel and a selected part of the adjoining graphical panel or panels in accordance with said designated array.

12. A device which executes a video game as described in Claim 11, wherein said controller restrains the operation of said character passing through said graphical panels to one of a plurality of predetermined paths each of which defines a crossing through said graphical panel.

13. A device which executes a video game as described in Claim 11, wherein each of said predetermined paths is directed in such a way that the operation of said character in line with said predetermined pass must follow a predetermined direction of crossing.

14. A device which executes a video game as described in Claim 11, wherein said movements include simulated battles and strategic tasks, said controller assessing said input signals in accordance with a predetermined set of rules governing said simulated battles and strategic tasks, selecting the position of said graphical panels and determining said graphical display of said character.

15. A device which executes a video game as described in Claim 11, wherein said controller also (i) allocates imaginary characters to said graphical panels, and (ii) executes the task of selecting graphical displays for each of the imaginary characters allocated to said designated panels in order to include them in said graphical image.

16. A device which executes a video game as described in Claim 15, wherein said controller also includes graphical displays of conversations, emotions, thoughts and other expressions in said graphical image for said imaginary characters allocated to said designated panels.

17. A device as described in Claim 11, wherein said controller generates for said image a graphical display showing said simulated page torn.

18. A device as described in Claim 11, wherein said controller generates for said image a graphical display showing said simulated page burning.

19. A device as described in Claim 11, wherein in response to said input signals said controller is linked to character data representing items collected in said graphical panels, said data including numerical points whereby the skill of said player is assessed.

20. A method of executing a video game, being a method wherein said video game is based on the theme of a comic book, and the player moves the character in the story through a series of graphical panels designated to mimic comic panels of the comic book, said method comprising the steps of:
a) receiving an input signal from the input device operated by said player, said input device specifying the movement of said character;
b) displaying one or more simulated pages of the comic book in the memory system, each simulated page containing a plurality of said graphical panels in a predetermined array;
c) including in a designated panel of said graphical panels the graphical display which is generated in accordance with said movement specified by said input signal;
d) extracting from said simulated page said graphical image, this graphical image being one which contains in line with said predetermined array said graphical panel and a selected part of an adjoining graphical panel; and
e) displaying said graphical image on the video display.

21. A method of executing a video game as described in Claim 20, having also the step of restraining the operation of said character passing through said graphical panels to one of a plurality of predetermined paths each of which defines a crossing through said graphical panel.

22. A method of executing a video game as described in Claim 21, wherein each of said paths is directed in such a way that the operation of said character in line with said predetermined paths must follow the predetermined direction of crossing.

23. A method of executing a video game as described in Claim 20, wherein said movements include simulated battles and strategic tasks, said method also assessing said input signals in accordance with a predetermined set of rules governing said simulated battles and strategic tasks, selecting the position of said graphical panels and determining said graphical display of said character.

24. A method of executing a video game as described in Claim 20, further comprising the steps of:
a) allocating imaginary characters to said graphical panels; and
b) executing the task of selecting graphical displays for each of the imaginary characters allocated to said designated panels in order to include them in said graphical image.

25. A method of executing a video game as described in Claim 24, having also the step of including graphical displays of conversations, emotions, thoughts and other expressions in said graphical image for said imaginary characters allocated to said designated panels.

26. A method as described in Claim 20, having also the step of generating for said image a graphical display showing said simulated page torn.

27. A method as described in Claim 20, having also the step of generating for said image a graphical display showing said simulated page burning.

28. A method as described in Claim 20, having also a step relating to character data representing items collected in sais graphical panels in response to said input signals, said data including numerical points whereby the skill of said player is assessed.

29. A video game device with a video game display and character data including a priority bit which determines the position of a designated character in relation to background and other character elements on this video display, the priority mapping system comprising:
a) a program source of the video game which includes game data and game commands for the purpose of implementing audio-visual display using a system controller;
b) a system controller, having a game microprocessor which implements the program of the video game, and a video display microprocessor which is connected to said game microprocessor and to a random access memory, being connected to said video display microprocessor, storing data which is used when implementing the video display, being used for audio-visual display of the video game on the display screen, this display having a plurality of panels divided by means of panel breaks, each panel exhibiting spatial and temporal boundary lines, with an active panel defined by the presence of the player-controlled character and dormant panels defined by the absence thereof;
c) a character data storage device wherein said character is stored as a string of data bits, one of these bits controlling the video display priority of that character during audio-visual display of the video game in such a way that a character with high display priority which is mapped to appear in the same position on the display screen as a character with low priority appears with priority over the character with low display priority; and
d) a priority controller which controls the interaction of said system controller and said character data storage device, this controller not only determining what portion of said video display shall constitute said active panel and what portion shall be displayed in dormant panels, but with regard to said active panel sends command to said system controller and implements said display priorities which are stored in said data storage device, while with regard to dormant panels of said video display it overrides said stored display priorities and implements high priority on all character elements in the dormant panels.

30. A method of allocating a character data storage device to the video random access memory in a video game device having a video random access memory for the purpose of storing character data, and a read-only memory for the purpose of storing virtual character data, said method comprising the steps of:
a) providing a video game device having a video random access memory for the purpose of storing character data, and a read-only memory for the purpose of storing virtual character data;
b) defining a video display area in said video random access memory corresponding to said video game device, and determining which virtual characters appear in said display area;
c) allocating video random access memory storage space for each virtual character which appears in said display area, and counting the frequency with which the virtual characters allocated to the video random access memory storage space appear in said area;
d) refreshing said video display area, overlaying that video random access memory storage space on to a link list when said character count has been decremented to zero, and refreshing that character count by means of the link list so as to define free video random access memory storage space which can be used for the allocation of virtual character data in subsequent display areas.

31. A method as described in Claim 30 which makes it possible to store and process more virtual character data than can be handled in a display using only said video random access memory storage space by means of this method of allocation.

32. A method of implementing graphical effects in a designated position on the video display screen of a video game device, comprising the steps of:
a) providing a list of graphical processing routines;
b) causing a horizontal interrupt to occur at a designated time and position on said video display screen which is formed by means of scan lines; and
c) calling up said graphical processing routing corresponding to said desired graphical effect during the horizontal interrupt whereby said graphical effect is implemented in said designated position on said video display screen.

33. A method as described in Claim 32 wherein the step of calling up said graphical routine in said designated position in order to obtain the desired graphical effect accompanies processing whereby the color palette used in order to generate the character elements is modified.

## Amended claims

### Amended claims under Art. 19.1 PCT

1. (Amended) A videogame device for playing games based on a mock comic book page having a player-controlled character and a story, comprising:
a program source of the videogame which includes game data and game commands, being used by a system controller which implements an audio-visual display simulating the comic book page; and
a system controller, having a game microprocessor which implements the program of the videogame , and a video display connector which is connected to the said microprocessor and to a random access memory wherein is stored data which is used when implementing video display, input signals from an input device which is operated by the player in such a way as to control the movement of the said player-controlled character being received and supplying the audio-visual display of the videogame on to a video display image by implementing the said videogame program source, this audio-visual display having a plurality of distinct panels divided by panel breaks, this plurality of panels being arranged consecutively to form a page layout, each panel exhibiting a spatial and temporal border in order to explain the comic book story and having a prescribed task to execute using the said player-controlled character, the order of these consecutive panels being determined in such a manner as to respond to a set of predefined game rules not defined by the player, and to respond to the said player's input device.

2. A videogame device as described in Claim 1, wherein the said audio-visual display also has simulated conversation balloons which convey emotions, story information or text effects.

3. A videogame device as described in Claim 1, wherein the said system controller allows the said player-controlled character to move only in a direction following the order of the panels and not to return to a panel which has already been visited.

4. A videogame device as described in Claim 1, wherein the proportions of the said page layout to the said audio-visual game display are selected so as to simulate an actual printed comic book page.

5. A videogame device as described in Claim 1, wherein the said audio-visual game display has graphical character animation which simulates the properties of the paper of the said mock comic book.

6. A videogame device as described in Claim 1, wherein the said system controller allows the player to select the route which the said player-controlled character follows between panels from a plurality of routes and to proceed in the said order of panels.

7. A videogame device as described in Claim 1, wherein at least one of the said audio-visual display panels has graphical character items which the said player-controlled character can collect in one frame and use in the next.

8. A videogame device as described in Claim 1, wherein the said system controller awards, follows and implements audio-visual display of points gained by a player by executing the said prescribed player tasks.

9. (Amended) A method of playing games based on a mock comic book page, being a method of providing a videogame device using an assembly of videogame program source, video display, controller and player-input device, said method comprising:
a) (i) a program source of the videogame which includes game data and game commands, being used by a system controller which implements an audio-visual display simulating the comic book page; and (ii) a processing step whereby, there being a game microprocessor which implements the program of the videogame , and a video display connector which is connected to the said microprocessor and to a random access memory wherein is stored data which is used when implementing video display, input signals from an input device which is operated by the player in such a way as to control the movement of the said player-controlled character are taken in and supply the audio-visual display of the videogame on to a video display image by implementing the said videogame program source, this audio-visual display having a plurality of distinct panels divided by panel breaks, this plurality of panels being arranged consecutively to form a page layout, each panel exhibiting a spatial and temporal border in order to explain the comic book story and having a prescribed task to execute using the said player-controlled character, the order of these consecutive panels being determined in such a manner as to respond to a set of predefined game rules not defined by the player, and to respond to the said player's input device;
b) a step whereby simulation of the story of the said comic book is initiated from the first of the panels arranged in consecutive order and using the player-controlled character;
c) a step whereby the said player-controlled character is controlled using the said player-input device to execute the said prescribed tasks;
d) a step whereby the said player-controlled character is moved using the said player-input device from one panel to the next panel in the said consecutive order of panels; and
e) a step whereby the story of an actual comic book is simulated by allowing the said player-controlled character to play through the said consecutive panels.

10. A method as described in Claim 9, wherein the said audio-visual display also has simulated conversation balloons which convey emotions, story information or text effects.

11. (Amended) A device which executes a videogame, being a device wherein the said videogame is based on the theme of a comic book, and the player moves the character in the story through a series of graphical panels designed on mock comic panels of the comic book, said device comprising:
a) a display device which displays graphical images;
b) a controller which receives input signals from an input device operated by the said player in such a way as to designate the movements of the said character, this controller (i) conveying at least one mock page of the comic book to the memory system, each page containing a plurality of the said graphical panels arranged in a prescribed array, (ii) including a graphical display of the said character in the prescribed panel of the said graphical panels, this graphical display being generated in accordance with the said movements designated by the said input signals, and (iii) extracting the said graphical image from the said mock page for the purpose of display by the said display device, this graphical image including the said designated graphical panel and a selected part of the adjoining graphical panel or panels in accordance with the said designated array.

12. A device which executes a videogame as described in Claim 11, wherein the said controller restrains the operation of the said character passing through the said graphical panels to one of a plurality of designated passes each of which defines a crossing through the said graphical panel.

13. A device which executes a videogame as described in Claim 11, wherein each of the said passes is directed in such a way that the operation of the said character in line with the said designated pass must follow the prescribed direction of crossing.

14. A device which executes a videogame as described in Claim 11, wherein the said movements include mock battles and strategic tasks, the said controller assessing the said input signals in accordance with a prescribed set of rules governing the said mock battles and strategic tasks, selecting the position of the said graphical panels and determining the said graphical display of the said character.

15. A device which executes a videogame as described in Claim 11, wherein the said controller also (i) allocates imaginary characters to the said graphical panels, and (ii) executes the task of selecting graphical displays for each of the imaginary characters allocated to the said designated panels in order to include them in the said graphical image.

16. A device which executes a videogame as described in Claim 15, wherein the said controller also includes graphical displays of conversations, emotions, thoughts and other expressions in the said graphical image for the said imaginary characters allocated to the said designated panels.

17. A device as described in Claim 11, wherein the said controller generates for the said image a graphical display showing the said simulated page torn.

18. A device as described in Claim 11, wherein the said controller generates for the said image a graphical display showing the said simulated page burning.

19. A device as described in Claim 11, wherein in response to the said input signals the said controller is linked to character data representing items collected in the said graphical panels, the said data including numerical points whereby the skill of the said player is assessed.

20. A method of executing a videogame , being a method wherein the said videogame is based on the theme of a comic book, and the player moves the character in the story through a series of graphical panels designed on mock comic panels of the comic book, said method comprising the steps of:
a) receiving an input signal from the input device operated by the said player, the said input device defining the movement of the said character;
b) displaying one or more mock pages of the comic book in the memory system, each mock page containing a plurality of the said graphical panels in a prescribed array;
c) including in an appointed panel of the said graphical panels the graphical display which is generated in accordance with the said movement defined by the said input signal;
d) extracting from the said mock page the said graphical image, this graphical image being one which contains in line with the said prescribed array the said graphical panel and a selected part of an adjoining graphical panel; and
e) displaying the said graphical image on the video display.

21. A method of executing a videogame as described in Claim 20, having also the step of restraining the operation of the said character passing through the said graphical panels to one of a plurality of designated passes each of which defines a crossing through the said graphical panel.

22. A method of executing a videogame as described in Claim 20, wherein each of the said passes is directed in such a way that the operation of the said character in line with the said designated pass must follow the prescribed direction of crossing.

23. A method of executing a videogame as described in Claim 20, wherein the said movements include mock battles and strategic tasks, the said method also assessing the said input signals in accordance with a prescribed set of rules governing the said mock battles and strategic tasks, selecting the position of the said graphical panels and determining the said graphical display of the said character.

24. A method of executing a videogame as described in Claim 20, further comprising the steps of:
a) allocating imaginary characters to the said graphical panels; and
b) executing the task of selecting graphical displays for each of the imaginary characters allocated to the said designated panels in order to include them in the said graphical image.

25. A method of executing a videogame as described in Claim 24, having also the step of including graphical displays of conversations, emotions, thoughts and other expressions in the said graphical image for the said imaginary characters allocated to the said designated panels.

26. A method as described in Claim 20, having also the step of generating for the said image a graphical display showing the said simulated page torn.

27. A method as described in Claim 20, having also the step of generating for the said image a graphical display showing the said simulated page burning.

28. A method as described in Claim 20, having also a step relating to character data representing items collected in the said graphical panels in response to the said input signals, the said data including numerical points whereby the skill of the said player is assessed.

29. A videogame device with a videogame display and character data including a priority bit which determines the position of a designated character in relation to background and other character elements on this video display, the priority mapping system comprising:
a) a program source of the videogame which includes game data and game commands for the purpose of implementing audio-visual display using a system controller;
b) a system controller, having a game microprocessor which implements the program of the videogame , and a video display microprocessor which is connected to the said game microprocessor and to a random access memory, being connected to the said video display microprocessor, storing data which is used when implementing the video display, being used for audio-visual display of the videogame on the display screen, this display having a plurality of panels divided by means of panel breaks, each panel exhibiting spatial and temporal boundary lines, with an active panel defined by the presence of the player-controlled character and dormant panels defined by the absence thereof;
c) a character data storage device wherein the said character data is stored as a string of data bits, one of these bits controlling the video display priority of a given character during audio-visual display of the videogame in such a way that a character with high display priority which is mapped to appear in the same position on the display screen as a character with low priority appears with priority over the character with low display priority; and
d) a priority controller which contracts the interaction of the said system controller and the said character data storage device, this controller not only determining what portion of the said video display shall constitute the said active panel and what portion shall be displayed in dormant panels, but with regard to the said active panel sends command to the said system controller and implements the said display priorities which are stored in the said data storage device, while with regard to dormant panels of the said video display it overwrites the said stored display priorities and implements high priority on all character elements in the dormant panels.

30. A method of allocating a character data storage device to the video random access memory in a videogame device having a video random access memory for the purpose of storing character data, and a read-only memory for the purpose of storing virtual character data, said method comprising the steps of:
a) providing a videogame device having a video random access memory for the purpose of storing character data, and a read-only memory for the purpose of storing virtual character data;
b) defining a video display area in the said video random access memory corresponding to the said videogame device, and determining which virtual characters appear in the said display area;
c) allocating video random access memory storage space for each virtual character which appears in the said display area, and counting the frequency with which the virtual characters allocated to the video random access memory storage space appear in the said area; and
d) refreshing the said video display area, overlaying that video random access memory storage space on to a link list when the said character count has been decremented to zero, and refreshing that character count by means of the link list so as to define free video random access memory storage space which can be used for the allocation of virtual character data in subsequent display areas.

31. A method as described in Claim 30 which makes it possible to store and process more virtual character data than can be handled in a display using only the said video random access memory storage space by means of this method of allocation.

32. A method of implementing graphical effects in a designated position on the video display screen of a video-game device, comprising the steps of:
a) providing a list of graphical processing routines;
b) causing a horizontal interrupt to occur at a designated time and position on the said video display screen which is formed by means of scan lines; and
c) calling up the said graphical processing routine corresponding to the said desired graphical effect during the horizontal interrupt whereby the said graphical effect is implemented in the said designated position on the said video display screen.

33. A method as described in Claim 32 wherein the step of calling up the said graphical routine in the said designated position in order to obtain the desired graphical effect accompanies processing whereby the colour palette used in order to generate the character elements is modified.

34. (Supplementary) A programme source as described in Claims 1 or 29.

35. (Supplementary) A method of displaying a television game screen simulating a comic book whereby the order in which the said player-controlled character progresses is set in advance in a plurality of the said panels, said method comprising the steps of:
a) displaying on the monitor screen a plurality of panels corresponding to the frames of the comic; and
b) displaying the player-controlled character which the player operates and moves between each of the said plurality of panels in one of the said plurality of panels displayed on the monitor screen.

36. (Supplementary) A method of displaying a television game screen as described in Claim 35 wherein the display area of the panel in which the said player-controlled character is present on the said monitor screen is made larger than the other panels.

37. (Supplementary) A method of displaying a television game screen as described in Claims 35 and 36 wherein the panel in which the said player-controlled character is present is made active, while the other panels are made dormant.
